# EUROPÄISCHE PATENTSCHRIFT

(11) **EP 1 787 206 B1**
(45) Veröffentlichungstag und Bekanntmachung des Hinweises auf die Patenterteilung: **03.12.2008**
(21) Anmeldenummer: 05784601.6
(22) Anmeldetag: 05.08.2005
(51) Int. Cl.: G06F 13/40

(54) **ANORDNUNG ZUR SIGNALÜBERTRAGUNG**
SIGNAL TRANSMISSION SYSTEM
DISPOSITIF DE TRANSMISSION DE SIGNAL

(30) Priorität: 06.09.2004 DE 102004043053
(43) Veröffentlichungstag der Anmeldung: 23.05.2007
(73) Patentinhaber: Continental Automotive GmbH, 30165 Hannover (DE); Klostermeier, Dieter, 78050 Villingen-Schwenningen (DE)
(72) Erfinder: WOLF, Peter, 78078 Niedereschach (DE); KLOSTERMEIER, Dieter, 78050 Villingen-Schwenningen (DE)
(86) Internationale Anmeldenummer: PCT/EP2005/053865
(87) Internationale Veröffentlichungsnummer: WO 2006/027301

(56) Entgegenhaltungen:
- US-A- 5 361 376
- US-A1- 2002 078 280
- US-B1- 6 453 374

## Beschreibung

Die Erfindung betrifft eine Anordnung mit Teilnehmern einer Signalübertragung nach dem Oberbegriff des Anspruchs 1.

Ein häufiges Problem bei der Übertragung von Signalen stellt sich, wenn eine bidirektionale Sende-Empfangsleitung einer asynchronen Schnittstelle an eine andere Sende-Empfangsleitung anzubinden ist. Eine hierbei gerne genutzte aber kostspielige Lösung besteht darin, dass Mikrocontroller der beiden teilnehmenden Kommunikationspartner mittels einer zusätzlichen Steuerleitung die Treiberrichtung zwischen Empfangen und Senden miteinander vereinbaren im Sinne eines Empfangs-Sendeprotokolls. Der entscheidende Nachteil dieser Vorgehensweise liegt in der Notwendigkeit einer zusätzlichen Steuerleitung zwischen dem ersten und dem zweiten Teilnehmer, beispielsweise zwischen einem Sensor zur Ermittlung eines zu einer Geschwindigkeit korrelierten Messwertes und einem Fahrtschreiber zur Aufzeichnung der Geschwindigkeit eines Nutzfahrzeuges.

Eine Anordnung mit zwei Modulen der eingangs genannten Art ist aus der US 2002/0078280 Al bekannt. Bei dieser Anordnung weisen die Module jeweils eine Sende-Empfangseinheit auf. Diese Sende-Empfangseinheiten sind über zwei Leitungen miteinander verbunden. Hierdurch ist diese Anordnung jedoch sehr aufwändig aufgebaut.

Die Erfindung hat es sich zur Aufgabe gemacht, eine Anordnung bereitzustellen, die die Kommunikation unter Teilnehmern einer Signalübertragung ohne zusätzliche Steuerleitungen auf möglichst einfache und kostengünstige Art und Weise erlaubt. Zur Lösung der erfindungsgemäßen Aufgabe schlägt die Erfindung eine Anordnung gemäß dem Anspruch 1 vor. Vorteilhafte Weiterbildungen der Erfindung enthalten die Unteransprüche.

Der entscheidende Vorteil der Anordnung nach der Erfindung liegt in der Fähigkeit des selbsttätigen Erkennens mittels der einem Kommunikationspartner zugeordneten Schaltung, ob es sich bei den detektierten Spannungspegeln um zu sendende Signale oder zu empfangende Signale handelt. Erfindungsgemäß können Teilnehmer einer Signalübertragung miteinander verbunden werden, die mit Schnittstellen von unterschiedlicher Physik ausgestattet sind, insbesondere mit Schnittstellen die sich hinsichtlich ihrer Direktionalität unterscheiden oder mit verschiedenen Spannungspegeln zu betreiben sind.

Eine andere vorteilhafte Anwendung der Erfindung liegt in dem Verbinden beispielsweise zweier unidirektionaler Schnittstellenpaare miteinander, die auch eine unterschiedliche Physik aufweisen können, wobei einem oder beiden Kommunikationspartnern jeweils eine erfindungsgemäße Schaltung zugeordnet werden kann, sodass zwischen den beiden Partnern nur eine Signalleitung erforderlich ist, ohne, dass es zu Kollisionen von Signalströmen oder sogar Signalverlusten kommt.

Bei den Schnittstellenanschlüssen gemäß der Erfindung kann es sich um beispielsweise völlig normale Steckverbindungen zur galvanisch leitenden Verbindung handeln. Die einzelnen Bezugsspannungen, mittels derer eine Anpassung der Signalpegel an die von den Schnittstellen geführten Spannungspegel erfolgt, können entweder an einer geeigneten Stelle einer gegebenenfalls in der Umgebung befindlichen elektrischen Schaltung abgegriffen werden oder mittels einer geeigneten Dimensionierung der verschieden Ohmschen Widerstände und Anschluss an eine Spannungsquelle erzeugt werden. Besonders vorteilhaft ist auch die Verwendung einer Bandgap-Diode zur Erzeugung des gewünschten jeweiligen Spannungspotentials. Erfindungsgemäß liegen die erste Bezugsspannung und dritte Bezugsspannung auf dem gleichen Referenzpotential. Eine in der Praxis geeignete Größenordnung für das Referenzpotential sind 5 Volt. Die zweite Bezugsspannung wird erfindungsgemäß mittels einer Spannungsteilung zwischen dem Referenzpotential und einem Massepotential oder mittels einer Bandgap-Diode erzeugt. Die zweite Bezugsspannung liegt hierbei mit Vorteil niedriger als 1 Volt, sodass die erste bidirektionale Schnittstelle dieses Referenzpotential, zum Beispiel bei einer LOW-aktiven Logik als LOW-Spannungspegel erkennt.

Zur Überbrückung weiterer Signalübertragungsstrecken ist es sinnvoll, wenn der Sendeanschluss und der Empfangsanschluss der Schaltung an jeweils einem Anschluss eines Treibers angeschlossen sind, der Signale verstärkt. Dieser Treiber kann mit dem Vorteil der Einsparung einer Leitung derart ausgebildet sein, dass die Signale auf eine einzelne bidirektional ausgebildete Signalleitung zusammengefasst werden. Dies setzt jedoch voraus, dass entsprechende Übertragungsprotokolle in den Arbeitsalgorithmus der an den jeweiligen Enden der Signalübertragung befindlichen Mikrokontroller implementiert sind.

Eine vorteilhafte Weiterbildung der Erfindung sieht vor, dass der erste Teilnehmer ein Tachograph ist und ein zweiter Teilnehmer ein Sensor, der an den ersten Teilnehmer zu einer Fahrzeuggeschwindigkeit korrelierte Signale übermittelt. Die Erfindung ist hier besonders vorteilhaft, weil die einschlägigen Standards die physikalischen Eigenschaften der Schnittstellen des Sensors und des Tachographen unterschiedlich festlegen.

Insbesondere bei einem dem ersten Teilnehmer zugeordneten Empfangstreiber, der im Umfeld einer LOW-aktiven-Logik auch den high-Pegel aktiv treibt, ist die Anordnung einer Diode in der Empfangsleitung der erfindungsgemäßen Schaltung besonders zweckmäßig, damit im Falles des Sendens des ersten Teilnehmers der dem ersten Teilnehmer zugeordnete Treiber mittels der sich an den Treiber anschließenden Empfangsleitung nicht das Potential des ersten Schnittstellenanschlusses an der bidirektionalen Schnittstelle des ersten Teilnehmers erhöht.

Im Folgenden ist die Erfindung anhand von Ausführungsbeispielen unter Bezugnahme auf Zeichnungen zur Verdeutlichung näher beschreiben. Es zeigen:
- Fig. 1: eine schematische Darstellung einer erfindungsgemäßen Anordnung, die auf das Wesentliche vereinfacht ist,
- Fig. 2: eine schematische Darstellung einer erfindungsgemäßen Anordnung unter Einbezug zweier zwischen geordneter Treiberbauelemente und
- Fig. 3: die sich bei der Anordnung gemäß Fig. 3 an dem ersten Schnittstellenanschluss ergebenden Spannungspegel im Rahmen einer Signalübertragung.

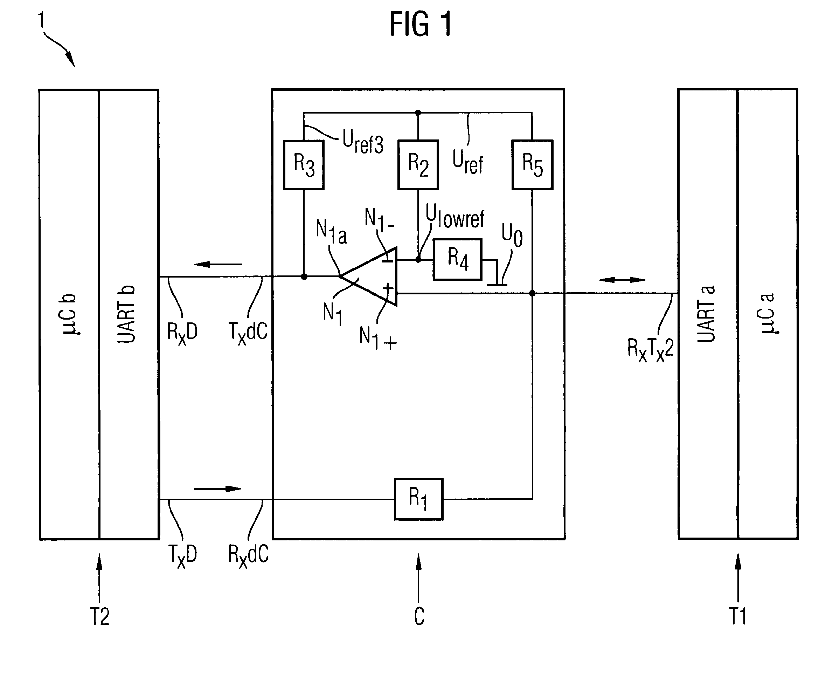

Figur 1 zeigt den grundsätzlichen Aufbau wesentlicher Bestandteile einer erfindungsgemäßen Anordnung 1 mit einem ersten Teilnehmer T1, einer Schaltung C und einem zweiten Teilnehmer T2. Der erste und zweite Teilnehmer T1, T2 weisen jeweils einen Mikrokontroller µCa, µCb und eine an diesen angeschlossene Schnittstelle UARTa, UARTb (UART = Universal Asynchronous Receiver Transmitter) auf.

Hierbei ist die erste Schnittstelle UARTa bidirektional mit einem ersten Schnittstellenanschluss RxTx2 zum Senden und Empfangen ausgebildet.

Die zweite Schnittstelle UARTb weist zwei zweite Schnittstellenanschlüsse, nämlich einen Empfangsanschluss RxdC und einen Sendeanschluss TxdC auf. Sowohl der Empfangsanschluss RxdC als auch der Sendeanschluss TxdC sind unidirektional ausgebildet.

Zwischen dem ersten Teilnehmer T1 und dem zweiten Teilnehmer T2 befindet sich die erfindungsgemäße Schaltung C, die mittels eines ersten Schnittstellenanschlusses RxTx2 mit dem ersten Teilnehmer T1 in bidirektionaler Signalübertragung steht und mittels des Sendeanschlusses TxdC und des Empfangsanschlusses RxdC mit einem Schnittstellenempfangsanschluss RxD bzw. einem Schnittstellensendeanschluss TxD des zweiten Teilnehmers T2 in jeweils unidirektionaler Verbindung steht. Zentrales Element der Schaltung C ist ein Komparator N1, an dessen invertierenden Eingang N1- eine Referenzspannung UlowRef anliegt. In Abhängigkeit von der an dem nicht invertierenden Eingang N1+ anliegenden Spannung erzeugt der Komparator N1 in Abhängigkeit von dem Ohmschen Widerstand R3 eine den physikalischen Eigenschaften der zweiten Schnittstelle UARTb und dem von dem Teilnehmer T1 zu sendenden Signal entsprechende Ausgangsspannung an seinem als Open-Kollektor ausgebildeten Ausgang N1a.

Die an dem invertierenden Eingang N1- des Komparators N1 anliegende Bezugsspannung ULOWRef ist hierbei mittels einer Spannungsteilung unter Verschaltung eines zweiten Widerstandes R2 und eines vierten Widerstandes R4 zwischen der Referenzspannung Uref und einem Massepotential U0 erzeugt.

Zwischen der Referenzspannung Uref und dem ersten Schnittstellenanschluss RxTx2 ist ein fünfter Ohmscher Widerstand R5 geschaltet, der die Funktion eines Pull-Up-Widerstands für die bidirektionale Leitung des ersten Schnittstellenanschlusses RxTx2 erfüllt.

Erzeugt der Teilnehmer T1 mittels der ersten Schnittstelle UARTa auf den ersten Schnittstellenanschluss RxTx2 den Spannungszustand HIGH von beispielsweise 5 Volt, so gibt der Komparator N1 auf dem Sendeanschluss TxdC eine dem HIGH-Pegel des Teilnehmers T2 entsprechende Spannung von beispielsweise 5 Volt aus.

Sendet der erste Teilnehmer T1 LOW, liegt an dem ersten Schnittstellenanschluss RxTx2 beispielsweise eine Spannung von 0 Volt an und der Komparator N1 gibt auf den Sendeanschluss TxdC eine Spannung von etwa 0 Volt aus, welche der Empfangsanschluss RxdC des zweiten Teilnehmers T2 als LOW erkennt.

Bei der als LOW-Aktive-Logik ausgebildeten Anordnung des Ausführungsbeispiels fällt am Empfangsanschluss RxdC die Spannung auf ca. 0 Volt ab, falls der zweite Teilnehmer T2 auf seinem Schnittstellensendeanschluss Txd mittels des verbundenen Empfangsanschlusses RxdC der Schaltung C sendet, wobei an einem ersten Ohmschen Widerstand R1 ein Spannungsabfall von etwa 1 Volt zu verzeichnen ist. Hierbei weist der erste bidirektionale Schnittstellenanschluss RxTx2 eine Spannung von etwa 1 Volt auf, da der fünfte Ohmsche Widerstand R5 eine entsprechende Dimensionierung aufweist und die Funktion eines Pull-Up-Widerstandes ausgehend von der Referenzspannung Uref hat. Die erste Schnittstelle UARTa toleriert hierbei die sich ergebende Spannung von etwa 1 Volt als LOW-Pegel, sodass sie als von dem zweiten Teilnehmer T2 gesendetes Signal detektiert wird.

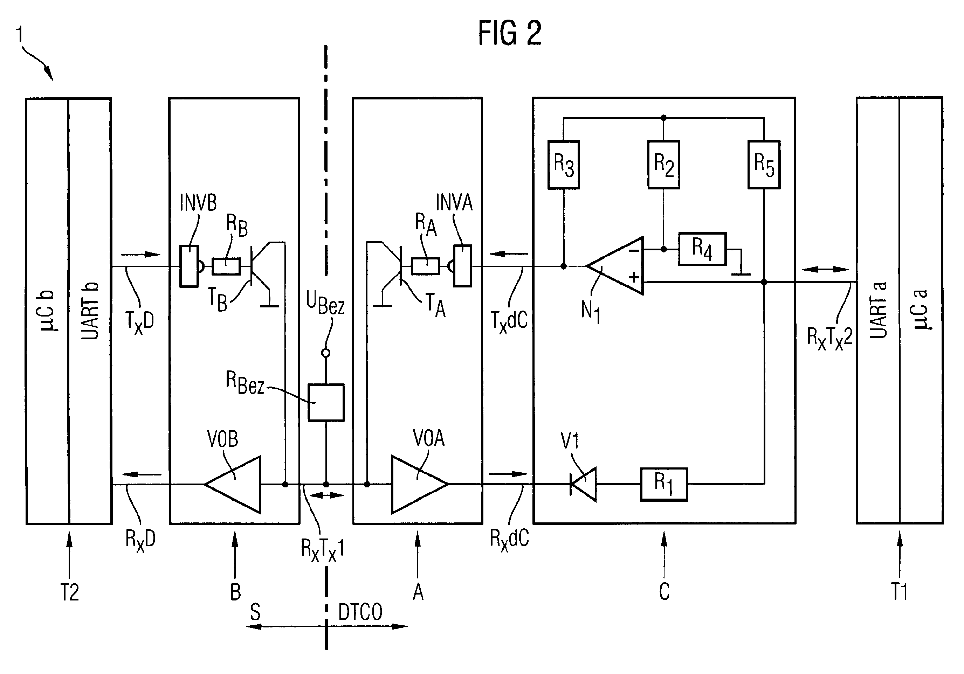

In weiterer Ausgestaltung zeigt Figur 2 eine Anordnung mit zwei Treibern A, B, die jeweils einem Teilnehmer T1, T2 zugeordnet sind. Die Darstellung zeigt schematisch von links nach rechts mit den Bauelement T2 und B zu einem Sensor S zugeordnete Bauteile der erfindungsgemäßen Anordnung 1 und mit den Bauelementen A, C und T1 zu einem digitalen Tachographen DTCO zugeordnete Bauteile der erfindungsgemäßen Anordnung 1.

Die Logik ist LOW-Aktiv ausgebildet, wobei der erste Teilnehmer T1 Spannungspegel zwischen 0 Volt und 1,5 Volt als LOW erkennt und Spannungen zwischen 4,5 und 5,5 Volt als HIGH. Der zweite Teilnehmer T2 hat eine entsprechende Erkennungscharakteristik und beide Teilnehmer senden LOW-Signale bei etwa 0 Volt. Der gesendete HIGH-Zustand liegt bei beiden Teilnehmern T1, T2 bei etwa 5 Volt.

Die Treiber A, B sind Bestandteil einschlägiger ISO-Normen und weisen jeweils einen Verstärker V0A, V0B, einen Transistor TA, TB, einen Basiswiderstand RA, RB und einen Inverter INVA, INVB auf. Zwischen den beiden Treibern A, B befindet sich eine bidirektionale Signalleitung RxTx1, die mittels eines Bezugswiderstandes RBEZ und einer Bezugsspannung UBEZ in Abhängigkeit des Sende- bzw. Empfangszustandes auf bestimmten Bezugsspannungsniveaus gehalten wird. Die beiden Treiber A, B schalten in Abhängigkeit der von den Teilnehmer T1 und T2 anliegenden Spannungspegel die Spannung der bidirektionale Signalleitung RxTx1 zwischen einem LOW und einem HIGH-Zustand hin und her, wobei die Teilnehmer T1 und T2 hierbei auf Basis eines bestimmten Protokolls miteinander Signale austauschen, welches entweder Kollisionen verhindert oder im Falle nicht verhinderter Kollisionen eine Wiederholung der Signalübertragung vorsieht. Dementsprechend sind die Treiber A und B in ihrem Verhalten auf das verwendete Protokoll der Signalübertragung abgestimmt. Insofern handelt es sich bei der bidirektionale Signalleitung RxTx1 nur um eine eingeschränkte Bidirektionalität, da sie mittels des Protokolls abgestimmt in der Richtung der Unidirektionalität wechselt.

Die Wirkungsweise der erfindungsgemäßen Schaltung C in dem Ausführungsbeispiel der Figur 2 entspricht derjenigen der in Figur 1 dargestellten Schaltung C, wobei zwischen dem Empfangsanschluss RxdC und dem ersten Widerstand R1 eine Diode V1 mit Durchlassrichtung entgegen der Signalrichtung des Empfangsanschlusses RxdC angeordnet ist. Die Durchlassrichtung der Diode ergibt sich derart, da es sich um eine LOW-Aktive Logik handelt. Die Diode V1 weist eine Spannungsabfall von etwa 0,5 Volt auf, sodass der Widerstand R1 so gering dimensioniert werden sollte, dass sich bei einem LOW-Signal des zweiten Teilnehmers T2 an dem ersten Schnittstellenanschluss RxTx2 eine Spannung von etwa 1 Volt einstellt, welche der erste Teilnehmer T1 als LOW-Signal toleriert. Die als Spannungsteiler angeordneten Widerstände R2 und R4 definieren an dem Komparator N1 die Schwelle für den LOW-Pegel, innerhalb dessen die Unterscheidung zwischen Senden und Empfangen in Bezug auf die erste Schnittstelle UARTa erfolgt. Diese kann beispielsweise bei 0,5 Volt liegen.

Sendet der erste Teilnehmer T1, fällt an der ersten Schnittstelle UARTa bzw. an dem ersten Schnittstellenanschluss RxTx2 die Spannung auf 0 Volt ab, sodass an dem Ausgang des Komparators N1a sich ebenfalls 0 Volt einstellen. In diesem Fall sorgt der Inverter INVA über den Basiswiderstand RA für eine Leitung des Transistors TA, der das Spannungsniveau der Signalleitung RxTx1 auf etwa 0 Volt absenkt. Dementsprechend detektiert der Schnittstellenempfangsanschluss Rxd den Spannungspegel LOW.

Sendet der zweite Teilnehmer T2, fällt an der ersten Schnittstelle UARTa bzw. an dem ersten Schnittstellenanschluss RxTx2 die Spannung auf 1 Volt ab, sodass an dem Ausgang des Komparators N1a an der Signalleitung RxTx1 sich 5 Volt einstellen. In diesem Fall sorgt der Inverter INVA über den Basiswiderstand RA für eine Spannung von 0 Volt an der Basis des Transistors TA. Der Schnittstellenanschluss RxTx2 toleriert die Spannung von 1 Volt als LOW.

Für den Fall, dass keiner der Teinehmer T1 oder T2 senden, ergibt sich die Spannung in der Signalleitung RxTx1 aufgrund der Verstärkungscharakteristik der Verstärker V0A, V0B zu 8 Volt. An dem ersten Schnittstellenanschluss RxTx2 und dem Empfangsanschluss RxdC liegen jeweils 5 Volt an, welches beide Teilnehmer T1, T2 als HIGH-Zustand erkennen.

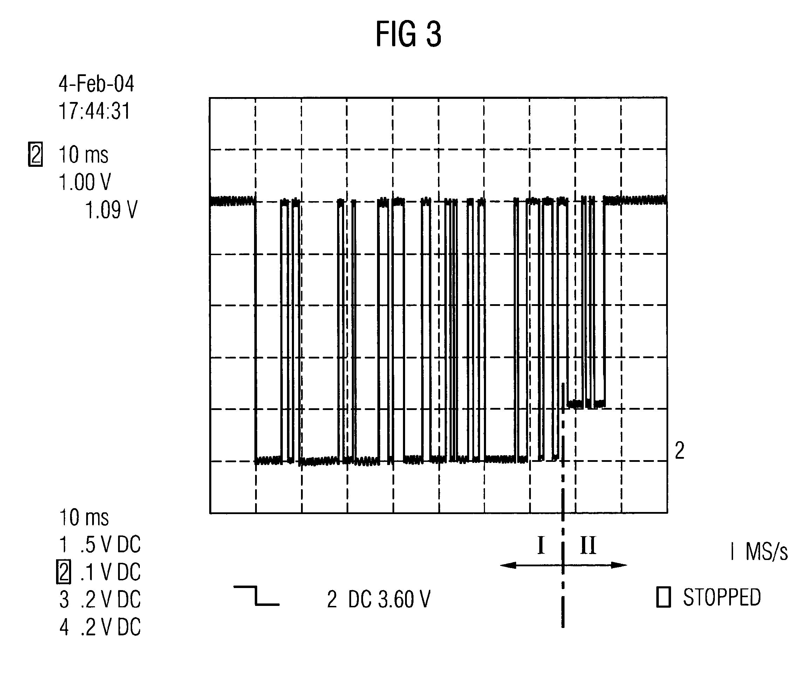

Figur 3 zeigt den Spannungsverlauf an dem ersten Schnittstellenanschluss TxTx2 während einer dortigen bidirektionalen Signalübertragung. Während einer mit I ausgewiesenen Zeitspanne sendet der Teilnehmer T1 einige Low-Signale und im Anschluss daran während einer mit II ausgewiesenen Zeitspanne wendet der Teilnehmer 2 LOW-Signale, welche abweichend von den LOW-Signalen des mit I bezeichneten Bereichs nicht bei 0 Volt liegen sondern bei etwa 1 Volt.

## Patentansprüche

1. Anordnung mit Teilnehmern (T1, T2) einer Signalübertragung und einer Schaltung (C) zum Anschluss bidirektionaler Schnittstellen von Teilnehmern an unidirektionale Schnittstellen anderer Teilnehmer (T1, T2), wobei die Schaltung (C)
- einen ersten Schnittstellenanschluss (RxTx2) zum Anschließen an eine erste bidirektionale Schnittstelle (UARTa) eines ersten Teilnehmers (T1) und
- einen zweiten Schnittstellenanschluss mit zwei zweiten Anschlüssen, jeweils zum Anschluss an zweite unidirektionale Schnittstellen, nämlich einem Empfangsanschluss (RxdC) zur Aufnahme von empfangenen Signalen und einem Sendeanschluss (TxdC) zum Versenden ausgehender Signale aufweist, wobei
- die Schaltung einen Komparator (N1) mit einem Invertierenden Eingang (N1-), einem Nicht-Invertierenden Eingang (N1+) und einem Komparatorausgang (N1a) umfasst,
- der erste Schnittstellenanschluss (RxTx2) an dem Nicht-Invertierenden Eingang (N1+) des Komparators (N1) angeschlossen ist,
- der Komparator (N1) mit seinem Invertierenden Eingang (N1-) an einer zweiten Bezugsspannung (ULOWRef) und der Komparatorausgang an dem Sendeanschluss angeschlossen ist,
**dadurch gekennzeichnet, dass**
- der erste Schnittstellenanschluss (RxTx2) unter Zwischenanordnung eines fünften ohmschen Widerstandes (R5) an einer ersten Bezugsspannung (Uref1) anliegt,
- der Komparatorausgang (N1a) unter Zwischenschaltung eines dritten ohmschen Widerstandes (R3) an einer dritten Bezugsspannung (Uref3) angeschlossen ist,
- der erste Schnittstellenanschluss (RxTx2) unter Zwischenschaltung eines ersten Widerstandes (R1) an dem Empfangsanschluss (RxdC) angeschlossen ist,
- dass die erste Bezugsspannung (Uref1) und die dritte Bezugsspannung (Uref3) auf einem gleichen Referenzpotential (Uref) liegen und
- die zweite Bezugsspannung (ULOWRef) mittels Spannungsteilung zwischen dem Referenzpotential (Uref) und einem Massepotential (U0) oder einer Bandgap-Diode erzeugt ist.

2. Anordnung nach Anspruch 1, **dadurch gekennzeichnet, dass** der Sendeanschluss (TxdC) und der Empfangsanschluss (RxdC) an jeweils einen Anschluss eines Treibers (A) angeschlossen sind, der Signale verstärkt.

3. Anordnung nach Anspruch 2, **dadurch gekennzeichnet, dass** der Treiber (A) die Signale auf eine einzelne bidirektional ausgebildete Signalleitung (RxTx1) zusammenfasst.

4. Anordnung nach einem der vorhergehenden Ansprüche,
**dadurch gekennzeichnet, dass** der erste Teilnehmer (T1) ein Tachograph (DTCO) ist und ein zweiter Teilnehmer (T2) ein Sensor (S), der an den ersten Teilnehmer (T1) zu einer Fahrzeuggeschwindigkeit (v) korrelierte Signale übermittelt.

5. Anordnung nach einem der vorhergehenden Ansprüche,
**dadurch gekennzeichnet, dass**, zwischen dem ersten Schnittstellenanschluss (RxTx2) und dem Sendeanschluss (TxdC) eine Diode (V1) vor oder nachfolgend dem ersten Widerstand (R1) angeordnet ist.

## Claims

1. Arrangement comprising subscribers (T1, T2) to a signal transmission system and a circuit (C) for connecting bidirectional interfaces of subscribers to unidirectional interfaces of other subscribers (T1, T2), the circuit (C) having
- a first interface connection (RxTx2) for connecting to a first bidirectional interface (UARTa) of a first subscriber (T1) and
- a second interface connection with two second connections, each for connecting to second unidirectional interfaces, specifically a reception connection (RxdC) for receiving received signals and a transmission connection (TxdC) for transmitting outgoing signals,
- the circuit comprising a comparator (N1) with an inverting input (N1-), a non-inverting input (N1+) and a comparator output (N1a),
- the first interface connection (RxTx2) being connected to the non-inverting input (N1+) of the comparator (N1),
- the comparator (N1) being connected by its inverting input (N1-) to a second reference voltage (ULOWRef), and the comparator output being connected to the transmission connection, **characterized in that**
- the first interface connection (RxTx2) is connected to a first reference voltage (Uref1) with intermediate arrangement of a fifth ohmic resistor (R5),
- the output (N1a) is connected to a third reference voltage (Uref3) with the intermediate connection of a third ohmic resistor (R3),
- the first interface connection (RxTx2) is connected to the reception connection (RxdC) with the intermediate connection of a first resistor (R2).
- that the first reference voltage (Uref1) and the third reference voltage (Uref3) are at the same reference potential (Uref) and
- the second reference voltage (ULOWRef) is generated by means of voltage division between the reference potential (Uref) and a ground potential (U0) or a band gap diode.

2. Arrangement according to Claim 1, **characterized in that** the transmission connection (TxdC) and the reception connection (RxdC) are each connected to a connection of a driver (A) which amplifies signals.

3. Arrangement according to Claim 2, **characterized in that** the driver (A) combines the signals on an individual signal line (RxTx1) of bidirectional design.

4. Arrangement according to one of the preceding claims, **characterized in that** the first subscriber (T1) is a tachograph (DTCO), and a second subscriber (T2) is a sensor (S) which transfers, to the first subscriber (T1), signals which are correlated with a vehicle velocity (v).

5. Arrangement according to one of the preceding claims, **characterized in that** a diode (V1) is arranged between the first interface connection (RxTx2) and the transmission connection (TxdC), upstream or downstream of the first resistor (R2).

## Revendications

1. Dispositif de transmission de signaux entre des usagers (T1, T2), comportant un circuit (C) destiné au raccordement d'interfaces bidirectionnelles d'usagers sur des interfaces unidirectionnelles d'autres usagers (T1, T2), où le circuit (C) comporte
- un premier raccordement d'interface (RxTx2) destiné à être raccordé à une première interface bidirectionnelle (UARTa) d'un premier usager (T1) et
- un deuxième raccordement d'interface comportant deux deuxièmes raccordements, destinés chacun à être raccordés à des deuxièmes interfaces unidirectionnelles, à savoir à un raccordement de réception (RxdC) permettant d'accueillir des signaux reçus et à un raccordement d'émission (TxdC) permettant d'émettre des signaux de sortie,
- où le circuit comprend un comparateur (N1) comportant une entrée inversante (N1-), une entrée non inversante (N1+) et une sortie de comparateur (N1a),
- où le premier raccordement d'interface (RxTx2) est raccordé à l'entrée non inversante (N1+) du comparateur (N1) ,
- où le comparateur (N1) est raccordé par son entrée inversante (N1-) à une deuxième tension de référence (ULOWRef) et la sortie du comparateur est raccordée au raccordement d'émission,
**caractérisé par le fait que**
- le premier raccordement d'interface (RxTx2) est soumis, à travers une cinquième résistance ohmique (R5), à une première tension de référence (Uref1),
- la sortie (N1a) du comparateur est raccordée, à travers une troisième résistance ohmique (R3), à une troisième tension de référence (Uref3),
- le premier raccordement d'interface (RxTx2) est raccordé, à travers une première résistance (R1), au raccordement de réception (RxdC),
- la première tension de référence (Uref1) et la troisième tension de référence (Uref3) sont mises au même potentiel de référence (Uref) et
- la deuxième tension de référence (ULOWRef) est générée au moyen d'une division de tension entre le potentiel de référence (Uref) et un potentiel de masse (U₀) ou au moyen d'une diode à bande interdite.

2. Dispositif selon la revendication 1, **caractérisé par le fait que** le raccordement d'émission (TxdC) et le raccordement de réception (RxdC) sont raccordés chacun au branchement d'un pilote (A) qui amplifie les signaux.

3. Dispositif selon la revendication 2, **caractérisé par le fait que** le pilote (A) rassemble les signaux sur un unique conducteur bidirectionnel de signaux (RxTx1).

4. Dispositif selon l'une des revendications précédentes,
**caractérisé par le fait que** le premier usager (T1) est un tachygraphe (DTCO) et un deuxième usager (T2) est un capteur (S) qui transmet au premier usager (T1) des signaux en corrélation avec une vitesse (v) du véhicule.

5. Dispositif selon l'une des revendications précédentes, **caractérisé par le fait qu'**une diode (V1) est placée avant ou après la première résistance (R1) entre le premier raccordement d'interface (RxTx2) et le raccordement d'émission (TxdC).
